# EUROPÄISCHE PATENTSCHRIFT

(11) **EP 1 373 840 B1**
(45) Veröffentlichungstag und Bekanntmachung des Hinweises auf die Patenterteilung: **23.09.2009**
(21) Anmeldenummer: 02712947.7
(22) Anmeldetag: 16.03.2002
(51) Int. Cl.: G01F 23/296

(54) **VORRICHTUNG ZUR FESTSTELLUNG UND/ODER ÜBERWACHUNG EINES VORBESTIMMTEN FÜLLSTANDES IN EINEM BEHÄLTER**
DEVICE FOR DETERMINING AND/OR MONITORING A PREDETERMINED LEVEL IN A CONTAINER
DISPOSITIF POUR LA DETERMINATION OU LA SURVEILLANCE D'UN NIVEAU DE REMPLISSAGE PREDEFINI DANS UN CONTENANT

(30) Priorität: 28.03.2001 DE 10115558; 06.11.2001 DE 10153936
(43) Veröffentlichungstag der Anmeldung: 02.01.2004
(73) Patentinhaber: ENDRESS + HAUSER GMBH + CO., 79689 Maulburg (DE)
(72) Erfinder: LOPATIN, Sergej, 79540 Lörrach (DE)
(74) Vertreter: Andres, Angelika Maria
(86) Internationale Anmeldenummer: PCT/EP2002/002957
(87) Internationale Veröffentlichungsnummer: WO 2002/079733

(56) Entgegenhaltungen:
- DE-A- 4 419 617
- US-A- 3 145 559
- US-A- 3 575 130
- US-A- 5 895 848

## Beschreibung

Die Erfindung betrifft eine Vorrichtung zur Feststellung und/oder Überwachung eines vorbestimmten Füllstandes in einem Behälter.

Derartige Füllstandsgrenzschalter werden in vielen Industriezweigen, insb. in der Chemie und in der Lebensmittelindustrie eingesetzt. Sie dienen zur Grenzstandsdetektion und werden z.B. als Überfüllsicherung oder als Pumpenleerlaufschutz verwendet.

In der DE-A 44 19 617 ist eine Vorrichtung zur Feststellung und/oder Überwachung eines vorbestimmten Füllstandes in einem Behälter beschrieben. Diese umfaßt:
- ein auf der Höhe des vorbestimmten Füllstandes
   angebrachtes mechanisches Schwingungsgebilde,
- einen elektromechanischen Wandler,
   - der das Schwingungsgebilde im Betrieb zu
      Resonanzschwingungen anregt, und
- eine Empfangs- und Auswerteeinheit, die
   dazu dient mittels einer Resonanzfrequenz der
   Resonanzschwingung zu bestimmen ob der vorbestimmte
   Füllstand erreicht ist oder nicht.

Die Patentschrift US 5,895,848 beschreibt ein Gerät zur Bestimmung eines Füllstands. Dafür wird eine Schwinggabel in Schwingung versetzt und anhand der Schwingungsfrequenz wird der Füllstand ermittelt. Um den Leistungsverbrauch zu reduzieren, wird eine Schwingungsfrequenz in der Nähe der Resonanzfrequenz der Schwinggabel benutzt. Die Schwinggabel selbst besteht aus zwei Paddeln, die an einer Membran befestigt sind. Nähere Details zur Ausgestaltung der Paddel sind nicht ausgeführt.

Die Patentschrift US 3,145,559 beschreibt eine Methode und einen Apparat, um die Änderung von physikalischen Eigenschaften, wie z.B. Dichte, Viskosität oder Füllstand eines Mediums zu bestimmen, wofür ein Paddel zu Schwingungen angeregt wird. Die Anregung geschieht über einen Stab, der mit dem Paddel verbunden ist. Die Schwingungen werden über einen zweiten Stab gemessen, der ebenfalls mit dem Paddel verbunden ist. Durch den Kontakt des Paddels mit dem Medium ändern sich die Eigenschaften, z.B. die Frequenz der Schwingung. Daraus lässt sich auf die Änderung einer physikalischen Größe des Mediums rückschließen. Eine Ausgestaltung des Paddels sieht vor, dass es sich um eine Kreisplatte handelt.

Der elektromechanische Wandler weist mindestens einen Sender auf, an dem ein elektrisches Sendesignal anliegt und der das mechanische Schwingungs-gebilde zu Schwingungen anregt. Es ist ein Empfänger vorgesehen, der die mechanischen Schwingungen des Schwingungsbildes aufnimmt und in ein elektrisches Empfangssignal umwandelt. Die Auswerteeinheit nimmt das Empfangssignal auf und vergleicht dessen Frequenz mit einer Referenz-frequenz. Sie erzeugt ein Ausgangssignal das angibt, daß das mechanische Schwingungsgebilde von einem Füllgut bedeckt ist, wenn die Frequenz einen Wert aufweist der kleiner als eine Referenzfrequenz ist, und daß es nicht bedeckt ist, wenn der Wert größer ist. Es ist ein Regelkreis vorgesehen, der eine zwischen dem elektrischen Sendesignal und dem elektrischen Empfangssignal bestehende Phasendifferenz auf einen bestimmten konstanten Wert regelt, bei dem das Schwingungsgebilde Schwingungen mit einer Resonanzfrequenz ausführt.

Der Regelkreis wird z. B. dadurch gebildet, daß das Empfangssignal verstärkt und über einen Phasenschieber auf das Sendesignal zurück gekoppelt wird.

Die Schwingungsgebilde weisen häufig eine Membran auf an der mindestens ein in den Behälter hinein ragender Schwingstab angeordnet ist. Im Betrieb werden die Schwingstäbe in Resonanzschwingungen senkrecht zu deren Längsachse versetzt. Damit beim Eintauchen des Schwingungsgebildes in die Flüssigkeit eine möglichst große Änderung der Schwingfrequenz auftritt, sind die Schwingstäbe endseitig paddelförmig ausgebildet.

Wird eine solche Vorrichtung in einem Behälter eingesetzt, indem eine Flüssigkeit, z.B. durch einen Befüllvorgang bedingt, eine wellige Oberfläche aufweist, so kann es sein, daß die Referenzfrequenz durch die Wellenbewegung der Flüssigkeit andauernd über- und wieder unterschritten wird. Die Vorrichtung arbeitet dann beim Erreichen des vorbestimmten Füllstandes nicht mehr stabil sondern wechselt in kurzen Abständen ihren Schaltzustand, ohne daß sich der Füllstand merklich ändert.

Besonders ausgeprägt ist dieses Problem, wenn die Vorrichtung von unten in einen Behälter eingebaut ist. Steigt nun der Füllstand vom Behälterboden ausgehend an, so liegt eine vorgegebene Frequenzänderung, bei der die Vorrichtung ihren Zustand ändert sehr viel näher am freien Ende des Schwingstabes, als wenn die Schwingstäbe von oben in den Behälter hinein ragen würden. Am freien Ende des Schwingstabes ändert sich die Resonanzfrequenz bei herkömmlichen Paddelformen mit der Eintauchtiefe sehr viel schneller als z.B. in einem mittleren Bereich des Paddels. Somit bewirken kleine Füllstandsänderungen in dem Fall große Frequenzänderungen. Hierdurch ist die Gefahr eines durch Oberflächenwellen ausgelösten einfachen oder häufigen Schaltzustandswechsels besonders groß.

Dies kann problematisch sein, wenn die Vorrichtung Teil einer großen Anlage ist, und die Füllstandinformation zur Regelung oder Steuerung anderer Anlageneinheiten herangezogen wird.

Es ist eine Aufgabe der Erfindung, eine Vorrichtung zur Feststellung und/oder Überwachung eines vorbestimmten Füllstands in einem Behälter anzugeben, die auch in Flüssigkeiten mit Oberflächenwellen stabil arbeitet.

Dies wird erfindungsgemäß durch die Merkmale des ersten Anspruchs gelöst.

Gemäß einer Weiterbildung schließt das Paddel mit einer Spitze ab.

Gemäß einer Ausgestaltung ist eine Hysteresestufe vorgesehen, die derart ausgestaltet ist, daß die Vorrichtung das erreichen des vorbestimmten Füllstands feststellt, wenn ein unterer Referenzfrequenzwert unterschritten wird und sie diesen Zustand solange beibehält, bis ein oberer Referenzfrequenzwert erreicht bzw. überschritten wird.

Die Erfindung und weitere Vorteile werden nun anhand der Figuren der Zeichnung, in denen vier Ausführungsbeispiele dargestellt sind, näher erläutert; gleiche Elemente sind in den Figuren mit gleichen Bezugszeichen versehen.
Fig. 1 zeigt einen Längsschnitt durch eine Vorrichtung zur Feststellung und/oder Überwachung eines vorbestimmten Füllstands;
Fig. 2 zeigt eine prozentuale Änderung der Frequenz mit der das Schwingungsgebilde in Abhängigkeit von dessen Eintauchtiefe in die Flüssigkeit schwingt für zwei verschiedene von oben in den Behälter eingebaute Paddelformen im Vergleich;
Fig. 3 zeigt eine prozentuale Änderung der Frequenz mit der das Schwingungsgebilde in Abhängigkeit von dessen Eintauchtiefe in die Flüssigkeit schwingt für zwei verschiedene von unten in den Behälter eingebaute Paddelformen im Vergleich;
Fig. 4 zeigt einen Schwingstab mit einem blattförmigen Paddel; und
Fig. 5 zeigt einen Schwingstab mit einem Paddel mit einem schmalen stumpfen Abschluß.

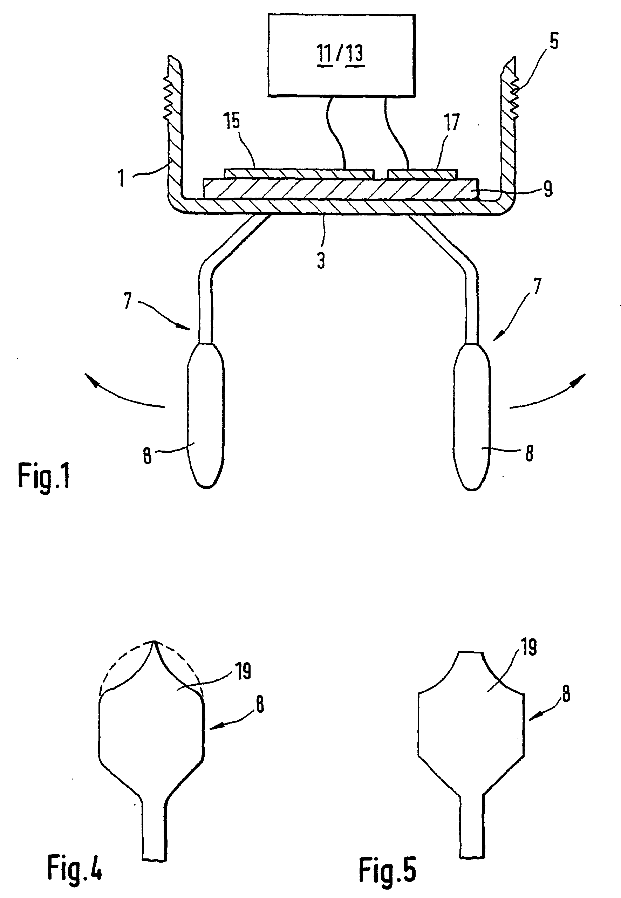

Fig. 1 zeigt einen Längsschnitt durch eine erfindungsgemäße Vorrichtung zur Feststellung und/oder Überwachung eines vorbestimmten Füllstandes in einem Behälter. Sie weist ein auf der Höhe des vorbestimmten Füllstandes anzubringendes mechanisches Schwingungsgebilde auf.

Das Schwingungsgebilde umfaßt ein im wesentlichen zylindrisches Gehäuse 1, das von einer kreisförmigen Membran 3 frontbündig abgeschlossen ist. An das Gehäuse 1 ist ein Gewinde 5 angeformt, mittels dessen die Vorrichtung in eine nicht dargestellte auf der Höhe des vorbestimmten Füllstands angeordnete Öffnung in einem Behälter einschraubbar ist. Andere dem Fachmann bekannte Befestigungsweisen, z.B. mittels an dem Gehäuse 1 angeformter Flansche, sind ebenfalls einsetzbar.

An der Außenseite des Gehäuses 1 sind an der Membran 3 zwei in den Behälter weisende Schwingstäbe 7 angeformt, die ebenfalls Bestandteil des Schwingungsgebildes sind. Diese werden durch einen im Inneren des Gehäuses 1 auf der Membran 3 angeordneten elektromechanischen Wandler 9 in Schwingungen senkrecht zu deren Längsachse versetzt. Als elektromechanischer Wandler 9 dient in dem dargestellten Ausführungsbeispiel ein scheibenförmiges piezoelektrisches Element, das auf die Membran 3 aufgebracht und fest mit dieser verbunden ist. Das piezoelektrische Element ist z.B. auf die Membran 3 aufgeklebt oder aufgelötet und dient dazu die Membran 3 im Betrieb in Biegeschwingungen zu versetzen. Durch diese Membranbewegung werden die Schwingstäbe 7 in Schwingungen senkrecht zu deren Längsachse L versetzt. An einem membran-abgewandten Ende weisen die Schwingstäbe 7 jeweils ein Paddel 8 auf, das durch einen breiteren Endabschnitt der Schwingstäbe 7 gebildet ist.

Das Schwingungsgebilde wird im Betrieb mittels einer elektronischen Schaltung 11 zu Resonanzschwingungen angeregt und es ist eine Empfangs- und Auswerteeinheit 13 vorgesehen, die dazu dient mittels einer Resonanzfrequenz der Resonanzschwingung zu bestimmen ob der vorbestimmte Füllstand erreicht ist oder nicht. Dies geschieht beispielsweise, indem auf einer membran-abgewandten Seite des piezoeleketrischen Elements 9 eine Sendeelektrode 15 und eine Empfangselektrode 17 angeordnet sind.

Über die elektronische Schaltung 11 liegt an der Sendeelektrode 15 ein elektrisches Sendesignal an, das das mechanische Schwingungsgebilde zu Schwingungen anregt. Die Schwingungen werden mittels der Empfangselektrode 17 aufgenommen und in ein elektrisches Empfangssignal umwandelt. Die Empfangs- und Auswerteeinheit 13 nimmt das Empfangssignal auf vergleicht dessen Frequenz mit einer Referenzfrequenz. Sie erzeugt ein Ausgangssignal das angibt, daß das mechanische Schwingungsgebilde von einem Füllgut bedeckt ist, wenn die Frequenz einen Wert aufweist der kleiner als die Referenzfrequenz ist, und daß es nicht bedeckt ist, wenn der Wert größer ist. In der elektronischen Schaltung 11 ist ein Regelkreis vorgesehen, der eine zwischen dem elektrischen Sendesignal und dem elektrischen Empfangssignal bestehende Phasendifferenz auf einen bestimmten konstanten Wert regelt, bei dem das Schwingungsgebilde Schwingungen mit einer Resonanzfrequenz ausführt.

Der Regelkreis wird z. B. dadurch gebildet, daß das Empfangssignal verstärkt und über einen Phasenschieber auf das Sendesignal zurück gekoppelt wird.

Erfindungsgemäß ist eine Form des Schwingungsgebildes so ausgebildet, daß sich die Resonanzfrequenz beim Eintauchen im Bereich des vorbestimmten Füllstands nur langsam mit einer Eintauchtiefe ändert. Dies ist zum Beispiel dadurch möglich, daß eine Form gewählt wird, bei der bei einem Hineinragen des Schwingungsgebildes von oben in den Behälter ein Schwerpunkt der Teile des Schwingungsgebildes die in das Füllgut eintauchbar sind, deutlich oberhalb eines bei ansteigendem Füllstand zuerst in die Flüssigkeit eintauchenden Ende des Schwingungsgebildes befindet.

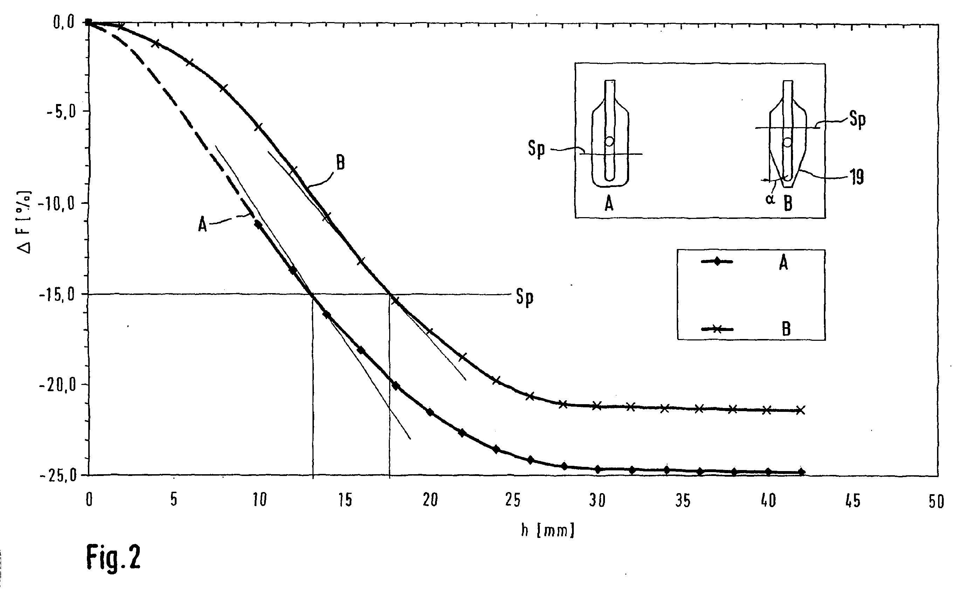

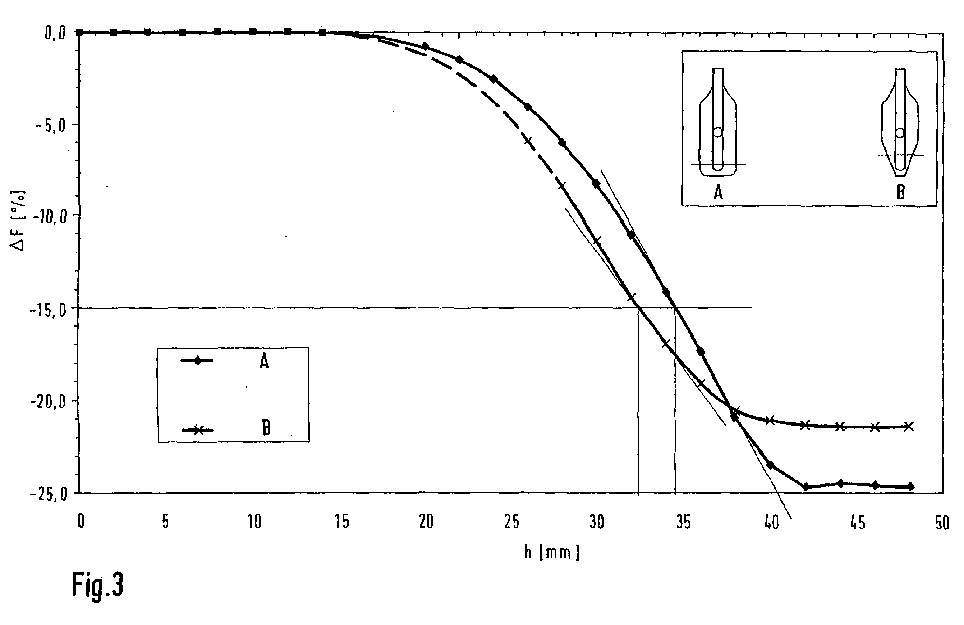

Fig. 2 zeigt ein Beispiel hierfür anhand einer Darstellung in der eine prozentualen Änderung der Resonanzfrequenz ΔF zweier von oben in den Behälter hineinragender Schwinggabelformen ihrem Betrage nach in Abhängigkeit von einer Eintauchtiefe h des Schwingungsgebildes in die Flüssigkeit aufgetragen ist. Die prozentualen Änderung der Resonanzfrequenz ΔF bezeichnet hier die Differenz der aktuellen Resonanzfrequenz und der Resonanzfrequenz, die das Schwingungsgebilde in Luft aufweist, bezogen auf die Resonanzfrequenz, die das Schwingungsgebilde in Luft aufweist. Die erste Schwinggabelform weist eine in der Fig. 3 dargestellte herkömmliche Paddelform A mit einer im wesentlichen rechteckigen Paddelfläche auf.

Die zweite Schwinggabel weist eine ebenfalls in Fig. 3 dargestellte erfindungsgemäß ausgebildete Paddelform B auf. Die Paddelform B weist einen membran-abgewandten Endbreich 19 auf, dessen Breite in membranabgewandter Richtung abnimmt. Vorzugsweise sind die Paddel 8 im Endbereich unter einem Winkel α zwischen 20° und 55° zur Längsachse des jeweiligen Paddels 8 abgeschrägt. Der Winkel α ist zur Verdeutlichung eingezeichnet. Das Paddel schließt mit einer Spitze ab.

Während bei herkömmlichen Vorrichtungen mit im wesentlichen rechteckförmigen Paddeln, sofort, wenn das Füllgut das membran-abgewandte Ende des Paddels erreicht die maximale Breite des Paddels in der Flüssigkeit schwingt und ein entsprechend großes Flüssigkeitsvolumen mitbewegt, reicht bei der beschriebenen Paddelform B zu Beginn des Eintauchvorgangs nur eine schmale Paddelspitze in die Flüssigkeit. Bei gleicher Eintauchtiefe h tritt also mit dem erfindungsgemäßen Paddel 8 zunächst eine sehr viel geringere prozentuale Frequenzänderung ein. Die dargestellte Kennlinie verläuft somit flacher als bei herkömmlichen Vorrichtungen mit Paddeln mit rechteckförmigem Längsschnitt.

Legt man einen Schaltpunkt Sp z.B. bei einer prozentualen Frequenzänderung von 15 % fest, so schaltet die herkömmliche Vorrichtung mit der Paddelform A bereits bei einer Eintauchtiefe von ca. 13 mm, die erfindungsgemäße Vorrichtung mit der Paddelform B schaltet dagegen erst bei einer Eintauchtiefe von ca. 18 mm. Die prozentuale Frequenzänderung ΔF verläuft bei der Paddelform B im Bereich des vorbestimmten Füllstandes, als in der Umgebung des Schaltpunktes Sp deutlich flacher als bei der Paddelform A. Dies ist durch die eingezeichneten Tangenten veranschaulicht. Die Eintauchtiefe h bei Erreichen des Schaltpunkts Sp ist zusätzlich auch direkt an den Abbildungen der Paddelformen A und B dargestellt.

Der Schaltpunkt Sp liegt natürlich immer im Bereich der Paddel, er liegt jedoch bei der Paddelform A näher am freien Ende des Paddels als bei der Paddelform B.

Der Schaltpunkt Sp kann auch durch die Wahl einer größeren zugeordneten prozentualen Frequenzänderung ΔF weiter von dem freien Ende des Paddels entfernt werden. Dies ist jedoch nur innerhalb sehr enger Grenzen möglich. Die zugehörige Frequenzänderung muß möglichst groß sein, um eine hohe Meßsicherheit zu bieten; sie muß aber in einer Vielzahl verschiedener Flüssigkeiten noch erreicht werden.

Untersuchungen haben gezeigt, daß die Empfindlichkeit der Vorrichtung, also die maximale Änderung der Resonanzfrequenz in einem bestimmten Medium bezogen auf die Resonanzfrequenz in Luft, wesentlich von der Breite der Paddel, nicht aber von deren Länge abhängt. Dies hängt unter anderem damit zusammen, daß ein längerer Schwingstab bei gleicher Breite ein deutlich größeres Massenträgheitsmoment aufweist. Der Endbereich der Paddel 8 kann daher schmaler werden, ohne daß dies größere Einbußen in der Ansprechempfindlichkeit der Vorrichtung zur Folge hat, solange die Paddel zumindest in einem mittleren Bereich ein ausreichende Breite aufweisen. Damit können auch vorbestimmte Füllstände von Flüssigkeiten mit sehr geringer Dichte noch einwandfrei detektiert werden.

Bei einer flachen Kennlinie, wie sie in Fig. 2 in Verbindung mit Paddelform B dargestellt ist, bleiben geringe Füllstandsänderungen, wie sie z.B. durch Oberflächenwellen im Behälter auftreten können ohne große Auswirkung auf die Resonanzfrequenz. Entsprechend führen sie seltener zum über- oder unterschreiten der Referenzfrequenz und damit zum Auslösen eines Schaltvorganges. Außerdem lassen sich die damit verbundenen geringen Resonanzfrequenzänderungen durch den Einbau einer Hysteresestufe geringer Höhe gänzlich ausschalten.

Die Hysteresestufe kann z.B. derart ausgestaltet sein, daß die Vorrichtung das erreichen des vorbestimmten Füllstands feststellt, wenn ein unterer Referenzfrequenzwert unterschritten wird und sie diesen Zustand solange beibehält, bis ein oberer Referenzfrequenzwert erreicht bzw. überschritten wird. Aufgrund der zuvor beschriebenen flachen Kennlinie der Vorrichtung können der obere und der untere Referenzfrequenzwert relativ nah beieinander liegen. Damit ist es möglich ein durch Oberflächenwellen bedingtes Hin- und Herschalten zu verhindern, ohne daß die Ansprechempfindlichkeit und die Zuberlässigkeit der Vorrichtung bei der Feststellung und/oder Überwachung des vorbestimmten Füllstandes beeinträchtigt wird.

Ein weiterer Vorteil der beschriebenen Paddelform besteht besteht darin, daß sie ein geringeres Massenträgheitsmoment aufweisen, und eine beim Schwingen der Schwingstäbe in der Flüssigkeit senkrecht zu deren Längsachse mit den Paddeln mitbewegte Flüssigkeitsmenge geringer ist, als bei als herkömmliche Paddel mit rechteckigen Paddelflächen. Dadurch wird erreicht, daß eine Reaktionszeit, die die Vorrichtung zur Erkennung eines Zustandsswechsels benötigt geringer ist. Ein Zustandswechsel bezeichnet hier ein Über- oder Unterschreiten des vorbestimmten Füllstands.

Zuvor ist in der Beschreibung davon ausgegangen worden, daß die Vorrichtung oberhalb des Behälters angeordnet ist und die Paddel in den Behälter hinein geführt sind. Diese Einbauweise ist z.B. dann vorgesehen, wenn der vorbestimmte Füllstand maximaler Füllstand ist. Alternativ kann die Vorrichtung natürlich auch unterhalb des Behälters angeordnet sein, und die Schwingstäbe führen nach oben in den Behälter hinein.

Fig. 3 zeigt die Abhängigkeit der prozentualen Frequenzänderung ΔF für Vorrichtungen mit den Paddelformen A und B in Abhängigkeit von der Eintauchtiefe bei von unten in den Behälter hineinragenden Schwingstäben. Die Flüssigkeit steigt nun bei ansteigendem Füllstand von der Membran 3 zu den Schwingstäbe 7 bis zu den Paddeln 8 auf.
Nimmt man auch hier wieder den vorgegebenen Schaltpunkt Sp bei einer Frequenzänderung ΔF von 15 % an, so liegt der Schaltpunkt Sp bei der Form A sehr nah am freien Ende des
Paddels 8. Die eingezeichnete Tangente zeigt, daß die prozentuale Frequenzänderung ΔF hier sehr steil abfällt. Dies ist wie eingangs beschrieben beim Auftreten von Oberflächenwellen sehr problematisch. Der Schaltpunkt Sp liegt bei der erfindungsgemäßen Paddelform B dagegen weiter vom freien Ende des Paddels weg und die Tangente verläuft sehr viel flacher.

Das in Verbindung mit Fig. 2 Gesagte zur Hysteresestufe und zur Reaktionszeit gilt in Verbindung mit Fig. 3 entsprechend.

Eine Vorrichtung, die die Paddelform B aufweist, arbeitet bei Oberflächenwellen sehr viel stabiler und zuverlässiger. Eine besonderer Vorteil ist, daß dies unabhängig davon ist, ob die Vorrichtung von oben oder von unten in den Behälter eingebaut ist.

Eine langsame Änderung der prozentualen Frequenzänderung ΔF mit der Eintauchtiefe ist realisierbar, indem eine im Betrieb durch das Füllgut bewegte projezierte Oberfläche einzelner Paddelabschnitt gleicher Länge in einem mittleren Abschnitt des Paddels maximal ist und zum freien Enden des Paddels hin abnimmt. Vorzugsweise schließen die Paddel an deren freiem Ende daher mit einer Spitze ab.

Die Figuren 4 und 5 zeigen weitere Beispiele möglicher Paddelformen. Das in Fig. 4 dargestellte Paddel weist eine Spitze auf. Bei dem durch eine durchgezogene Linie dargestellten Form sind die Seitenlinien des Schnitts durch die Spitze leicht zur Paddelmitte bewölbt. Bei dem durch eine gestrichtelte Linie dargestellten Ausführungsbeispiel sind die Seitenlinien leicht von der Paddelmitte nach außen gewölbt. In beiden Fällen ist jedoch eine deutliche Spitze vorhanden und die breite des Paddel nimmt zu dessen freiem Ende hin ab. Eine im Schnitt rechteckige Paddelform mit abgerundeten Ecken ist nicht geeignet, um die genannten Vorteile zu erzielen. Ebensowenig ist eine leichte Abschrägung der Paddel über deren gesamte Länge dazu geeignet.

Bei dem in Fig. 5 dargestellten Ausführungsbeispiel sind die Seitenlinien der Paddelspitze leicht zur Paddelmitte nach innen gewölbt, daß Paddel endet jedoch nicht in einem auf einen Punkt zuführenden Ende, sondern in einem bezogen auf eine maximal auftretende Paddelbreite schmalen stumpfen Abschluß. Auch dieser stumpfe Abschluß fungiert aufgrund dessen geringer Breite als eine Spitze.

Ein zusätzlicher Vorteil der dargestellten erfindungsgemäßen Paddelformen besteht darin, daß hochviskose, zähe oder sogar klebrige Flüssigkeiten an der Paddelspitze leichter und schneller abfließen als an einem Paddel mit rechteckigem Querschnitt. An dem Paddel anhaftende Flüssigkeit bewirkt eine Erhöhung des Massenträgheitsmomentes der Schwingstäbe 7 und führt damit ebenfalls zu einer Reduktion der Resonanzfrequenz. Dies kann je nach Flüssigkeit dazu führen, das die Vorrichtung ein Erreichen bzw. Überschreiten des vorbestimmten Füllstandes anzeigt, obwohl der Füllstand bereits wieder abgefallen ist. Ein schnelles Abfließen der Flüssigkeit von den Schwinggabeln 7 bedeutet, daß die Vorrichtung schneller erkennt, wenn das Schwingungsgebilde nicht mehr in das Füllgut eingetaucht ist.

Ein weiterer Vorteil besteht darin, daß die beschriebenen Paddelformen eine geringere Oberfläche aufweist, als herkömmliche Paddel mit rechteckigem Querschnitt. Damit ist die Oberfläche, an der sich z.B. durch antrocknende Flüssigkeit Ansatz bilden kann, gering. Auch Ansatz führt zu einer permanenten Änderung der Resonanzfrequenz und wirkt sich nachteilig auf die Ansprechempfindlichkeit der Vorrichtung aus.

Die Erfindung ist jedoch nicht auf mechanische Schwingungssysteme mit zwei Schwingstäben beschränkt; sie kann auch bei Grenzschaltern eingesetzt werden, die nur einen oder keine Schwingstäbe aufweisen. Wesentlich ist das die Form des Schwingungsgebildes so ausgebildet ist, daß sich die Resonanzfrequenz zu Beginn eines Eintauchvorgangs nur langsam mit der Eintauchtiefe ändert. Eine solche flache Kennlinie ist bei Schwingungsgebilden, die flächige Element aufweisen, die beim Erreichen bzw. Überschreiten des vorbestimmten Füllstands in die Flüssigkeit eintauchen gegeben, wenn der Flächenschwerpunkt und der zugehörige Massenschwerpunkt in einer membran- bzw. behälterwandzugewandten Hälfte des flächigen Elements liegen. Dies ist bei Schwingstäben mit Paddeln der Fall, wenn eine im Betrieb durch das Füllgut bewegte projezierte Oberfläche einzelner Paddelabschnitte gleicher Länge in einem mittleren Abschnitt des Paddels maximal ist und zum freien Enden des Paddels hin abnimmt.

## Patentansprüche

1. Vorrichtung zur Feststellung und/oder Überwachung eines vorbestimmten Füllstandes in einem Behälter, welche Vorrichtung umfaßt:
- ein auf der Höhe des vorbestimmten Füllstandes
angebrachtes mechanisches Schwingungsgebilde,
- einen elektromechanischen Wandler (9),
- - der das Schwingungsgebilde im Betrieb zu Resonanzschwingungen anregt, und
- eine Empfangs- und Auswerteeinheit (13), die
dazu dient mittels einer Resonanzfrequenz
der Resonanzschwingung zu bestimmen, ob der
vorbestimmte Füllstand erreicht ist oder nicht,
- wobei das Schwingungsgebilde mindestens einen auf einer
Membran (3) befestigten Schwingstab (7) aufweist,
- - der im Betrieb Resonanzschwingungen senkrecht zu
dessen Längsachse (L) ausführt, und
- - an den endseitig ein Paddel (8) angeformt ist,
**dadurch gekennzeichnet,**
**dass** die Breite des Paddels (8) in einem mittleren Abschnitt des
Paddels (8) maximal ist und zum freien Enden des
Paddels (8) hin abnimmt,
wobei das Paddel (8) im Endbereich (19) unter einem Winkel (α) zwischen 20° und 55° zur Längsachse (L) des Paddels (8) abgeschrägt ist.

2. Vorrichtung nach Anspruch 1,
**dadurch gekennzeichnet,**
**dass** das Paddel (8) mit einer Spitze abschließt.

3. Vorrichtung nach Anspruch 1,
**dadurch gekennzeichnet,**
**dass** eine Hysteresestufe vorgesehen ist, die derart ausgestaltet ist, daß die Vorrichtung das Erreichen des vorbestimmten Füllstands feststellt, wenn ein unterer Referenzfrequenzwert unterschritten wird und sie diesen Zustand solange beibehält, bis ein oberer Referenzfrequenzwert erreicht bzw. überschritten wird.

## Claims

1. Unit for determining and/or monitoring a prespecified level in a tank, said unit comprising:
- a mechanical oscillation structure fitted at the height of the prespecified level
- an electromechanical converter (9),
- - which excites the oscillation structure to resonance oscillations during operation and
- a receiver and evaluation unit (13) which uses a resonating frequency of the resonance oscillation to determine whether the prespecified level has been reached or not
- whereby the oscillation structure exhibits at least one oscillation rod (7) secured on a membrane (3)
- - said rod effectuating resonance oscillations vertical to its axis (L) during operation and
- - exhibiting a paddle (8) at the end
**characterized in that**
the width of the paddle (8) is maximum in the central section of the paddle (8) and is reduced in size towards the free end of the paddle (8),
whereby the end area (19) of the paddle (8) is slanted vis-à-vis the axis (L) of the paddle (8) at an angle (α) between 20° and 55°

2. Unit as per Claim 1,
**characterized in that** the paddle (8) ends in a point.

3. Unit as per Claim 1,
**characterized in that** a hysteresis step is provided that is designed in such a way that the unit determines that the prespecified level is reached if a lower reference frequency value is undershot and it retains this state until an upper reference frequency value is reached or overshot.

## Revendications

1. Dispositif destiné à la détermination et/ou la surveillance d'un niveau prédéfini dans un réservoir, lequel dispositif comprend :
- un système vibrant mécanique disposé à la hauteur du niveau prédéfini,
- un convertisseur électromécanique (9),
- - qui, en fonctionnement, excite le système vibrant en des vibrations de résonance, et
- une unité de réception et d'exploitation (13), qui sert, au moyen d'une fréquence de résonance de la vibration de résonance, à déterminer si le niveau prédéfini est atteint ou non,
- le système vibrant comportant au moins une tige vibrante (7) fixée sur une membrane (3),
- - laquelle tige exécute, en fonctionnement, des vibrations de résonance perpendiculairement à l'axe longitudinal (L), et
- - tige sur laquelle est formée une palette (8) en son extrémité,
**caractérisé en ce**
**que** la largeur de la palette (8) est maximale dans une section médiane de la palette (8) et décroît en direction de l'extrémité libre de la palette (8),
la palette (8) étant biseautée dans la zone d'extrémité (19), selon un angle (α) compris entre 20° et 55° par rapport à l'axe longitudinal (L) de la palette (8).

2. Dispositif selon la revendication 1,
**caractérisé en ce**
**que** la palette (8) se termine par une pointe.

3. Dispositif selon la revendication 1,
**caractérisé en ce**
**qu'**est prévu un étage d'hystérésis, conçu de telle manière que le dispositif détermine l'atteinte du niveau prédéfini lorsqu'une valeur de fréquence de référence inférieure est dépassée par le bas et que cet état est conservé jusqu'à ce qu'une valeur de fréquence de référence supérieure soit atteinte ou dépassée.
